# FASCICULE DE BREVET EUROPEEN

(11) **EP 1 021 956 B1**
(45) Date de publication et mention de la délivrance du brevet: **14.05.2003**
(21) Numéro de dépôt: 99403205.0
(22) Date de dépôt: 17.12.1999
(51) Int. Cl.: A23B 5/005

(54) **Procédé d'obtention d'oeufs liquides longue conservation**
Verfahren zur Herstellung von lagerstabilen Flüssigeizusammensetzungen
Method for obtaining storage stable liquid egg products

(30) Priorité: 20.01.1999 FR 9900592
(43) Date de publication de la demande: 26.07.2000
(73) Titulaire: Liot, Michel, 86450 Pleumartin (FR)
(72) Inventeur: Liot, Michel, 86450 Pleumartin (FR)
(74) Mandataire: Keib, Gérard

(56) Documents cités:
- FR-A- 2 641 676
- FR-A- 2 750 574
- FR-A- 2 751 180
- GB-A- 579 605
- GB-A- 2 282 051
- GB-A- 2 297 234
- US-A- 4 989 668

## Description

L'invention a pour objet un procédé d'obtention de produits d'oeufs frais, blancs, jaunes, entier, longue conservation après traitement thermique, et un dispositif mettant en oeuvre ce procédé.

On connaît déjà des procédés destinés à l'augmentation de la durée de conservation de produits d'oeufs, utilisant des traitements thermiques, notamment la pasteurisation.

De nombreux procédés ont été développés pour limiter les risques de dégradation des produits due à la pasteurisation.

Le document WO 97/10 718 décrit un procédé de traitement d'un produit liquide à base d'oeuf, constitué essentiellement de blanc d'oeuf et/ou de jaune d'oeuf. Le produit est soumis à un processus de pasteurisation avec deux niveaux de température.

Le document WO 96/38 045 décrit un procédé de production d'oeuf liquide à longue durée de conservation à température ambiante. Le procédé comprend une étape de réchauffement par application d'un courant électrique alternatif à haute fréquence, puis un refroidissement, puis à nouveau un réchauffement par application d'un courant alternatif à haute fréquence.

Le document EP A 482 228 décrit un procédé faisant intervenir un écoulement turbulent à température élevée (inférieur à 160°F) pendant moins d'une minute puis suivi d'un refroidissement rapide immédiat (25 à 40°F).

Ces procédés impliquent des traitements thermiques complexes et présentent malgré tout des risques de dégradation des produits.

Le document FR A 2 720 602 décrit un procédé de pasteurisation de produits alimentaires liquides à base d'oeufs. L'oeuf liquide représente une faible fraction, comprise entre 15 et 55 % du poids du mélange. La pasteurisation se fait entre 65 et 70°C.

Le document FR A 2 750 574 décrit un procédé de traitement de blancs d'oeufs liquides obtenu après cassage d'oeuf frais incluant une étape de chauffage sensiblement continu et lent jusqu'à une température de maintien. Le procédé comprend les étapes suivantes :
- cassage des oeufs frais et séparation des constituants, à une température comprise entre 0 et 18°C;
- élévation lente de température du blanc d'oeuf liquide dans une cuve avec échangeur de chaleur, sur une durée comprise entre 30 et 240 minutes, jusqu'à la température de maintien comprise entre 40 et 48°C, et de préférence entre 42 et 45°C ;
- maintien de la température de maintien à ce niveau pendant 1 à 5 jours, les produits étant emballés dans des récipients étanches à l'air.

Mais ce procédé ne concerne pas les jaunes d'oeufs liquides et l'entier.

D'autres procédés, utilisant des rayonnements ont été envisagés, pour éviter une dégradation thermique.

Par exemple, le document WO 96/39 876 décrit un procédé utilisant des champs électriques, le document WO 95/26 636 décrit un procédé utilisant des ondes radio électriques, le document EP A 497 099 décrit un procédé utilisant des champs électromagnétiques alternatifs.

Un autre type de procédé consiste à utiliser des additifs.

Le document FR A 2 751 181 utilise des marquants stabilisés bactériologiquement, le document WO 96/32 019 utilise un revêtement plastique comestible qui entoure les oeufs. Le document EP A 663 151 décrit un procédé utilisant une composition amylacée fermentée acide. Mais l'utilisation d'additifs est gênante pour l'obtention de produits naturels.

Mais l'utilisation de rayonnements ou d'additifs n'est pas toujours bien perçue par les consommateurs.

L'on recherche ainsi un procédé simple, permettant de pallier les inconvénients des techniques antérieures, et d'obtenir des ovoproduits liquides longue conservation, blanc d'oeuf, jaune d'oeuf, entier, très proches des produits d'origine, et aptes à être conservés à température ambiante pendant plusieurs mois, typiquement trois à six mois.

L'invention a pour objet, selon un premier aspect, un procédé d'obtention de produits d'oeufs liquides longue conservation selon la revendication 1.

Selon une réalisation, la ou les fractions sont filtrées après cassage des oeufs et stockées froides à une température inférieure à 20°C, de préférence de 4°C pendant une durée inférieure à trois jours, et de préférence de un jour.

Après l'étape de refroidissement qui suit l'étape de maintien en température, la ou les fractions sont conditionnées dans des emballages étanches à l'air pour une conservation pendant environ trois à six mois.

Selon une réalisation le refroidissement après l'étape de maintien en température se fait en boucle fermée.

Selon une variante de réalisation, les fractions sont traitées sensiblement simultanément lors de l'étape de stockage réfrigération et de l'étape de réchauffage jusqu'à la température de maintien.

Selon une autre variante de réalisation, les fractions sélectionnées sont traitées en alternance, successivement pour chaque étape du procédé.

Selon une réalisation, entre l'étape de réchauffage jusqu'à la température de maintien et l'étape de maintien en température, la ou les fractions subissent une étape supplémentaire de concentration par exemple par ultra filtration de manière à obtenir une augmentation de l'extrait sec dans les fractions.

Les fractions sont maintenues à une température de maintien, de 40 à 55°C pour les blancs, de 50 à 66°C pour l'entier, additionnées d'additifs tels que du sucre, du sel, avant d'être refroidies lors de l'étape de refroidissement.

Selon un second aspect, l'invention a pour objet un dispositif selon les revendications 9, 10 mettant en oeuvre le procédé selon l'invention. Celui-ci comprend des moyens de cassage et de séparation des oeufs en fractions blancs, jaunes, entier, des moyens de filtration de ces fractions, des moyens de refroidissement des fractions filtrées.

Le dispositif comprend des moyens de stockage froid, typiquement entre 0 et 4°C tels que des cuves tampon.

Selon une variante de réalisation, les moyens de refroidissement sont des échangeurs à plaques, des échangeurs tubulaires ou analogues, distincts des moyens de stockage.

Selon une autre variante, les moyens de refroidissement sont intégrés aux moyens de stockage cuves tampon à double enveloppe.

Le dispositif comprend des moyens de pompage des fractions réfrigérées par les moyens de refroidissement, jusque dans des moyens d'homogénéisation tels qu'une pompe à haute pression et/ou dans des moyens de débourbage, les moyens d'homogénéisation et les moyens de débourbage permettant l'éclatement des fractions avant le réchauffage jusqu'à la température de maintien.

Le dispositif comprend des moyens de réchauffement rapide au dessus de 40°C, jusqu'à une température proche de la température de maintien .

Selon une réalisation, les moyens de réchauffement sont des échangeurs à plaques.

Le dispositif comprend des moyens de stockage chaud tels que des cuves process à double enveloppe chaude, des moyens de contrôle et de commande de la température dans les cuves process pour le maintien des fractions à la température de maintien, et des moyens d'agitation lente pour faciliter le dégazage des fractions dans les cuves process.

Les cuves process et les cuves tampon ont une capacité comprise entre 1000 et 20 000 litres, et de préférence entre 5000 et 10 000 litres.

Le dispositif comprend des moyens de refroidissement après l'étape de maintien à la température de maintien, qui permettent le refroidissement en boucle des fractions en cuves process sans incorporation d'air.

Selon une variante, le dispositif comprend des moyens de concentration par exemple par ultra filtration et des moyens de séchage des fractions concentrées.

Il comprend des moyens de conditionnement séparé des fractions après l'étape de refroidissement.

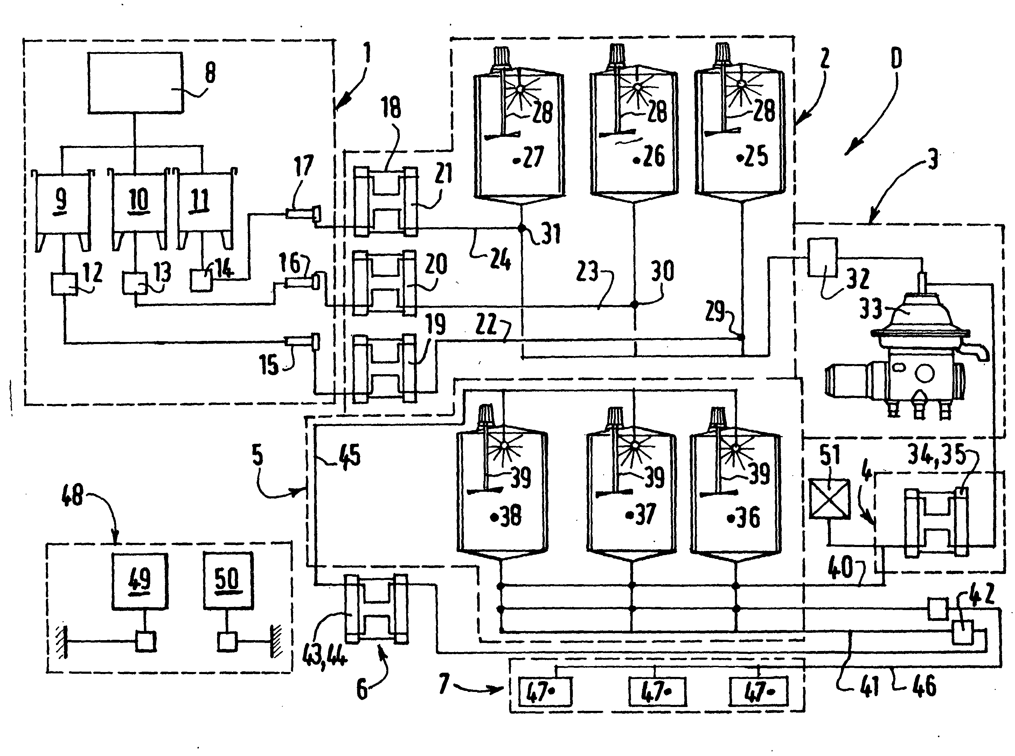

L'invention sera bien comprise grâce au dessin annexé qui représente un premier mode de réalisation du procédé selon l'invention.

On décrit maintenant un premier mode de réalisation.

Le dispositif D comprend
- un premier module 1 de cassage séparation-filtration ;
- un second module 2 de refroidissement stockage à froid ;
- un troisième module 3 de débourbage ou homogénéisation ;
- un quatrième module 4 de réchauffage ;
- un cinquième module 5 appelé par la suite module process ;
- un sixième module 6 de refroidissement ;
- un septième module 7 de conditionnement.

Le premier module 1 comprend une casseuse 8 des oeufs frais, typiquement entre 0 et 25° C, et de préférence entre 15 et 17° C.

Les oeufs sont séparés après cassage en une fraction 9 blancs d'oeufs, une fraction 10 jaunes d'oeufs, et une fraction 11 appelée « entier » obtenue par mélange des blancs et des jaunes. Dans ce mode de réalisation, le procédé se rapporte aux trois fractions, blancs, jaunes, entier, qui subissent un traitement séparé après le cassage.

Les fractions 9, 10, 11 sont pompées par des moyens de pompage tels que des pompes positives 12, 13, 14 respectivement, puis filtrées par des moyens de filtration tels que filtres à tube 15, 16, 17, au moins un pour chaque fraction. Le diamètre de filtration est voisin par exemple de 500 µm, de manière à éliminer l'essentiel des particules résiduelles après cassage.

Les fractions 9, 10, 11 sont ensuite acheminées vers le second module 2.

Le module comprend des moyens de refroidissement 18 des fractions 9, 10, 11.

Les moyens de refroidissement 18 sont typiquement des échangeurs à plaques 19, 20, 21, un par fraction. On peut utiliser également des échangeurs tubulaires par exemple.

Les fractions 9, 10, 11 sont ensuite acheminées par des canalisations 22, 23, 24 dans des moyens de stockage froid tels que des cuves tampon 25, 26, 27 respectivement, à double enveloppe.

Le débit au niveau des échangeurs à plaques 19, 20, 21 est par exemple de 0 à 10 000 litres par heure à 0°C. Les cuves tampon 25, 26, 27 sont par exemple d'une capacité de 5 000 litres ou plus et la température en cuves est voisine de 4°C.

Selon une variante de réalisation, le second module 2 ne comprend pas de moyens de refroidissement 18 distincts des cuves tampon 25, 26, 27. Les fractions 9, 10, 11 sont refroidies directement dans les cuves tampon 25, 26, 27, plus lentement par exemple en quelques heures, jusqu'à une température voisine de 4°.

Les fractions 9, 10, 11 sont mélangées à l'aide de moyens d'agitation 28 dans les cuves tampon pour maintenir une température suffisante. La durée de conservation dans les cuves tampon 25, 26, 27 peut être de quelques heures à quelques jours, et de préférence un jour.

La durée de stockage froid est suffisamment courte pour limiter le développement de la flore microbienne dans les cuves tampon 25, 26, 27 avant l'élévation de température.

Les fractions sont ensuite acheminées par actionnement de vannes 29, 30, 31 et de moyens de pompage 32 dans le troisième module 3.

Le module 3 comprend des moyens de débourbage 33 tels qu'une débourbeuse du type centrifugeuse et/ou des moyens d'homogénéisation tels qu'une pompe à haute pression écrasant les fractions 9,10,11. Ce débourbage ou cette homogénéisation sont destinés au nettoyage des fractions des particules non souhaitées restant dans l'oeuf, et à l'éclatement des fractions 9,10,11 pour obtenir pour chaque fraction un état très liquide et pour la suite du procédé.

Dans cette réalisation, une seule débourbeuse ou une seule pompe à haute pression est nécessaire grâce aux cuves tampon 25, 26, 27 : le pompage des fractions 9, 10, 11 est effectué en alternance en commandant l'actionnement des vannes 29, 30, 31.

La débourbeuse ou la pompe à haute pression peut être nettoyée entre le débourbage ou l'homogénéisation de chaque fraction.

Selon une variante de réalisation, une débourbeuse ou une pompe à haute pression est utilisée par fraction.

Les fractions 9, 10, 11 sont acheminées après le débourbage ou l'homogénéisation vers le quatrième module 4 de réchauffage.

L'étape suivante est une étape de réchauffement des fractions 9, 10, 11 jusqu'à leur température de maintien. Cette étape fait intervenir le quatrième module 4 et le cinquième module 5.

Selon une variante de réalisation, l'étape de refroidissement à 4° C avant le réchauffement peut être supprimée: les fractions 9, 10, 11 sont directement acheminées après filtration par les filtres 15, 16, 17 vers le troisième et le quatrième module 4 pour l'élévation de température.

Le quatrième module 4 comprend des moyens de réchauffement 34 destinés au réchauffement jusqu'à une température voisine de la température de maintien définie pour chacune des fractions 9, 10, 11.

La durée de réchauffement et les moyens de réchauffement utilisés sont définis pour exposer le moins possible les fractions à des températures comprises entre 20 et 40°C, cette zone entraînant une instabilité des fractions 9, 10, 11 liée à des variations de pH. Le pH des fractions entier, blanc, jaune, est typiquement respectivement de 7.5, 9 à 9.2, 6.5. Le passage rapide de la zone entre 20° et 40° permet de maintenir ces valeurs de pH sensiblement constantes. Les produits se dégradent pour des variations de pH de l'ordre de 0.3. Il en sera de même lors de l'étape de refroidissement décrite plus loin.

De préférence ce réchauffement est ainsi rapide, quasi immédiat ou de l'ordre de quelques minutes et utilise comme moyens de réchauffement un échangeur à plaques 35.

Un échangeur à plaques à 10 000 litres/heure est par exemple utilisé pour traiter un volume de 10 000 litres.

D'autres moyens de réchauffement tels qu'un échangeur électrique ou un échangeur tubulaire par exemple peuvent être utilisés si les volumes des fractions 9, 10, 11 traités sont suffisamment faibles pour obtenir rapidement la température de maintien de chaque fraction 9, 10, 11.

Les fractions 9, 10, 11 sont ensuite conduites dans le cinquième module 5.

Dans le module 5, la température est contrôlée et les fractions 9, 10, 11 sont stockées chaud à une température de maintien. Ce stockage chaud permet le déroulement des mécanismes suivants :
- l'assainissement des fractions des germes pathogènes
- la séparation des gaz des fractions 9, 10, 11 liquides
- l'activation de mécanismes de défense pour chaque fraction 9, 10, 11 de l'oeuf.

L'activation serait associée à la mise en activité des lisozymes de l'oeuf.

Le cinquième module comprend des cuves process 36, 37, 38 respectivement pour les fractions 9, 10, 11, où se produisent ces mécanismes, facilités par :
- l'état très liquide et l'éclatement des fractions obtenus par le débourbage ;
- l'agitation lente dans les cuves process 36, 37, 38 par des moyens d'agitation lente 39.

La température des fractions 9, 10, 11 dans les cuves process 36, 37, 38 est contrôlée à l'aide de moyens de contrôle et de régulation (non représentés) indépendamment pour chaque cuve.

Les cuves process 36, 37, 38 comportent une double enveloppe chaude. La capacité des cuves process 36, 37, 38 est par exemple de 5 000 litres ou plus.

Les fractions liquides 9, 10, 11 sont acheminées à partir des moyens de réchauffement 34 par des canalisations 40 situées jusqu'aux cuves process 36, 37, 38.

Pour la cuve 36 contenant la fraction 9 blancs d'oeufs, la température est maintenue sensiblement entre 40 et 50°C, de préférence voisine de 45°C. Cette température est nettement inférieure à la température de coagulation voisine de 57° C. Le procédé évite ainsi les risques de dénaturation liés à une pasteurisation supérieure à 55° C.

Plus précisément, les blancs d'oeufs 9 étant une fraction sensible aux variations de chaleur, la température de la fraction 9 dans la cuve process 36 est initialement sensiblement de 43° C, puis est augmentée lentement jusqu'à la température de maintien de 45° C. L'eau utilisée dans la double enveloppe de la cuve process est à une température de l'ordre de 46 ou 47°C. La durée de chauffage est augmentée en conséquence pour que les blancs d'oeufs liquides atteignent la température de sensiblement 45°C.

Pour la fraction jaunes 10 d'oeufs, la température est maintenue sensiblement entre 50 et 66°C, de préférence 55°C.

Pour la fraction 11 entiers, la température est également maintenue entre 50 e 66°C, de préférence 55°C.

La durée de la phase de maintien en température en cuve process 36, 37, 38 est comprise entre sensiblement 30 minutes et 3 à 4 jours, et typiquement d'environ une heure.

Cette durée est fonction notamment du volume traité et de la vitesse d'obtention des produits finaux souhaitée.

Le procédé selon l'invention permet d'obtenir un réchauffement rapide des fractions 9, 10, 11 jusqu'à plus de 40°C, puis leur stockage dans les cuves process 36, 37, 38.

Après l'étape de maintien à la température de maintien des fractions 9, 10, 11 à dans les cuves process 36, 37, 38, les fractions 9, 10, 11 sont refroidies jusqu'à une température inférieure à 20°C, et de préférence voisine de 4°C. Le refroidissement fait intervenir le cinquième module 5 et le sixième module 6.

Le refroidissement se fait de préférence par recyclage en boucle fermée pour éviter l'incorporation d'air. Les fractions liquides 9, 10, 11 sont recyclées au moyen de canalisations d'extraction 41, à l'aide de moyens de pompage 42, en passant par des moyens de refroidissement 43 tels qu'un échangeur à plaques 44 qui permettent le refroidissement rapide des fractions 9, 10, 11 et le maintien à une température de stockage froid choisie, les fractions étant réinjectées en sortie de l'échangeur 44 par des canalisations 45 vers les cuves process 36, 37, 38. Le débit dans les moyens de pompage 42 est par exemple de 5 000 litres par heure ou plus.

Le refroidissement en boucle fermée se fait plus lentement que si l'on utilise un refroidissement en ligne mais le risque d'altération des fractions lors de la descente en température, notamment de 40 à 20° C est réduit par rapport à l'étape de réchauffage : les fractions ont à ce stade une meilleure stabilité, liée à la forte réduction de la flore microbienne lors du chauffage et de la quantité d'oxygène après dégazage dans les cuves process 36, 37, 38.

Le débit dans l'échangeur à plaques 44 est par exemple de 5000 à 10 000 litres par heure.

Après l'étape de refroidissement, les fractions 9, 10, 11 parviennent, par des canalisations 46, au septième module 7 de conditionnement. Ce module 7 comprend des moyens de conditionnement 47 telles que des conditionneuses, une par fraction. Chaque fraction est répartie dans des emballages étanches à l'air de capacité variable.

La durée de conditionnement dans ces emballages est comprise entre trois et six mois selon le type d'emballages utilisé, les emballages aseptiques permettent une durée de conservation supérieure.

Les fractions sont généralement conditionnées à froid à une température inférieure à 18° C.

Pour les jaunes d'oeufs élaborés visqueux, le conditionnement peut être effectué à chaud sans passer par l'étape de refroidissement.

Une fois conditionnées dans des emballages, les fractions 9, 10, 11 obtenues sont prêtes à être conservées. La fraction blancs 9 peut être conservée à température ambiante, les fractions jaune 10 et entier 11 sont conservées de préférence à environ 4°C.

Le blanc d'oeuf peut être conservé pendant six mois environ. Le jaune d'oeuf peut être conservé pendant environ six mois, voire un an pour le jaune d'oeuf sucré à 50 % et le jaune salé à 11 % et dans des conditionnements aseptiques.

Les pompes utilisées pour les différentes étapes du procédé sont par exemple des pompes volumétriques de type Mouvex®.

Les qualités rhéologiques (aptitude à la coagulation et au foisonnement notamment) et bactériologiques des fractions obtenues, mesurées entre le début et la fin de la conservation, donnent de très bons résultats.

L'analyse bactériologie (germes aérobies totaux, salmonelles, staphylocoques...), révèle ainsi :
- une flore totale par gramme nettement inférieure à 10 000 qui est la norme en vigueur, et généralement inférieure à 1 000
- une absence permanente de staphylocoques et de salmonelles.

Les moyens de nettoyage 48 utilisés sont par exemple un système NEP comprenant une zone d'envoi 48 vers les différents modules, une zone de retour 49 des différents modules.

Dans le premier mode de réalisation décrit, les trois fractions, blanc d'oeuf 9, jaune d'oeuf 10, entier 11, sont traitées selon des lignes de production distinctes.

Selon une première variante du premier mode de réalisation, les fractions 9, 10, 11 sont traitées sensiblement simultanément, sauf aux étapes pour lesquelles un appareil commun est utilisé, comme c'est le cas pour l'étape de débourbage ou d'homogénéisation et l'étape de refroidissement après maintien en température.

Selon une seconde variante du premier mode de réalisation, le traitement est légèrement décalé, par exemple pour produire une fraction en quantité supérieure aux deux autres. Le décalage est toutefois régulé grâce aux cuves tampon pour éviter une altération des fractions en attente.

On peut également augmenter le nombre d'appareils utilisés.

Selon une réalisation, pour les blancs d'oeufs 9, deux cuves tampon et deux cuves process sont utilisées.

Selon une autre réalisation, une débourbeuse ou une pompe à haute pression est utilisée par fraction 9,10,11.

Selon un deuxième mode de réalisation, les trois fractions 9, 10, 11 sont traitées dans une même ligne de production, en alternance, le dispositif ne comprenant qu'une cuve process 36.

Les trois fractions 9, 10, 11 sont traitées l'une après l'autre dans la cuve process 36. Le réglage de l'ouverture des vannes et du système de pompage permet un stockage dans les cuves tampon 36,37,38, puis un réchauffage en alternance pour chaque fraction 9,10,11 dans la cuve process unique 36, avec une étape de nettoyage de la cuve 36 entre les fractions 9, 10, 11.

Selon un troisième mode de réalisation, le procédé est utilisé seulement pour une ou deux fractions choisies parmi le blanc, le jaune, l'entier. Comme dans le premier mode de réalisation, le nombre d'éléments peut varier selon les besoins.

Le choix du mode de réalisation et de ses variantes est fonction notamment du nombre de fractions souhaitées en fin de procédé, du volume de chaque fraction à traiter, du coût de l'installation.

On comprend ainsi que de très nombreux modes de réalisation sont possibles en jouant sur la durée et la température à chaque étape, et le nombre d'éléments utilisés.

Selon un quatrième mode de réalisation, une étape d'ultra filtration est réalisée après le réchauffage jusqu'à la température de maintien et avant l'acheminement en cuves process. L'ultra filtration permet l'obtention d'un extrait sec à teneur en eau contrôlée. L'ultra filtration utilise des moyens d'ultra filtration 50 fonctionnant en circuit fermé jusqu'à obtention de l'extrait sec voulu avec les cuves process 36, 37, 38. D'autres méthodes que l'ultrafiltration, destinées à la concentration sont utilisables.

L'extrait sec est ensuite maintenu dans les cuves process 36,37, 38 par exemple à température ambiante inférieure à 30° C puis refroidi avec recyclage fermé par les moyens de refroidissement 43 jusqu'à une température de conservation de préférence proche de 4°C.

Des additifs tels que du sucre ou du sel ou des arômes peuvent aussi être ajoutés dans ces cuves process aux fractions.

Selon un cinquième mode de réalisation, la température de maintien en cuve process est régulée avec précision pour obtenir des produits spécifiques.

La fraction blancs d'oeufs 9 est amenée dans la cuve process 36 à une température de maintien de 40° C. La température est ensuite abaissée jusqu'à 38° C en 24 heures, des ferments étant ajoutés dans la cuve 36 pendant cette durée. Le pH de la cuve 36 est diminué suite à la fermentation provoquée, conduisant à des blancs d'oeufs présentant des propriétés organoleptiques spécifiques. Les blancs liquides sont ensuite refroidis comme décrit précédemment en boucle fermée puis transformés en poudre dans une tour d'atomisation par exemple avant d'être conditionnés.

Le procédé selon l'invention conduit à des produits adaptés à des demandes très variées en modulant les températures et les durées de traitement, ce qui lui confère une grande souplesse d'utilisation.

Par exemple, pour une utilisation industrielle avec des volumes traités élevés, tels que 10 000 litres de produits, on peut programmer un chauffage doux en cuves process et une durée de conservation longue. Pour des utilisations standard traditionnelles, on peut au contraire programmer un chauffage élevé et une durée conservation plus courte.

## Revendications

1. Procédé d'obtention de produits d'oeufs liquides longue conservation, comprenant un traitement thermique après cassage des oeufs frais et séparation des composants à une température comprise entre 0 et 25°C et comprenant les étapes de :
- sélection d'au moins une des fractions liquides (9, 10, 11) à traiter obtenues après cassage des oeufs : blancs d'oeuf (9), jaunes d'oeuf (10), entier (11) ;
- débourbage ou homogénéisation pour éliminer les impuretés résiduelles, et éclater la ou les fractions (9, 10, 11) en petites particules, la température étant inférieure à 20°C ;
- réchauffage rapide de la ou des fractions (9, 10, 11), sensiblement immédiatement ou en quelques minutes, jusqu'à une température de maintien comprise sensiblement entre 40 et 55°C pour la fraction blancs (9), et de préférence de 45°C, entre 50 et 66°C pour la fraction jaunes (10), et de préférence 55°C, et entre 50 et 66°C pour la fraction entier (11), et de préférence 55°C ;
- maintien en température à la température de maintien, avec dégazage par agitation lente, de la ou des fractions (9, 10, 11) pendant une durée comprise sensiblement entre 30 minutes et 4 jours ;
- refroidissement jusqu'à la température de conservation, inférieure à 25°C ; la durée de conservation étant d'au moins trois mois sans incorporation d'additifs,
ledit procédé étant **caractérisé en ce que** les fractions sont conditionnées dans des emballages étanches à l'air après le refroidissement.

2. Procédé selon la revendication 1, **caractérisé en ce qu'**il comprend, entre l'étape de sélection d'au moins une des fractions liquides (9, 10, 11) à traiter et l'étape de débourbage ou d'homogénéisation, une étape de stockage froid à une température inférieure à 20°C, de préférence de 4°C, pendant une durée inférieure à trois jours, et de préférence de un jour.

3. Procédé selon la revendication 2, **caractérisé en ce que** la ou les fractions (9, 10, 11) sélectionnées sont filtrées après cassage des oeufs et avant le stockage froid.

4. Procédé selon l'une quelconque des revendications 1 à 3, **caractérisé en ce que** le refroidissement après l'étape de maintien en température se fait en boucle fermée de manière à éviter l'incorporation d'oxygène.

5. Procédé selon l'une quelconque des revendications 2 à 4, **caractérisé en ce que** les fractions (9, 10, 11) sont traitées sensiblement simultanément lors de l'étape de stockage réfrigération et de l'étape de réchauffage jusqu'à la température de maintien.

6. Procédé selon l'une quelconque des revendications 1 à 5, **caractérisé en ce que** les fractions (9, 10, 11) sélectionnées sont traitées en alternance, successivement pour chaque étape du procédé.

7. Procédé selon l'une quelconque des revendications 1 à 6, **caractérisé en ce que**, entre l'étape de réchauffage jusqu'à la température de maintien et l'étape de maintien en température, la ou les fractions (9, 10, 11) subissent une étape supplémentaire de concentration par exemple par ultra filtration de manière à obtenir une augmentation de l'extrait sec dans les fractions (9, 10, 11).

8. Procédé selon l'une quelconque des revendications 1 à 7, **caractérisé en ce que** les fractions sont maintenues à une température de maintien, de 40 à 55°C pour les blancs, de 50 à 66°C pour l'entier, additionnées d'additifs tels que du sucre, du sel, avant d'être refroidies lors de l'étape de refroidissement.

9. Dispositif pour la mise en oeuvre du procédé tel que présenté dans l'une quelconque des revendications 3 à 6 , **caractérisé en ce qu'**il comprend des moyens de cassage et de séparation (8) des oeufs en fractions blancs (9), jaunes (10), entier (11), des moyens de filtration (15, 16, 17) de ces fractions (9, 10, 11), des moyens de refroidissement (18) des fractions (9, 10, 11) filtrées, des moyens de stockage froid, des moyens de débourbage ou d'homogénéisation, des moyens de réchauffement rapide (34), des moyens de stockage chaud, des moyens de refroidissement (43) après l'étape de maintien à la température de maintien et des moyens de conditionnement (47) séparé des fractions après l'étape de refroidissement.

10. Dispositif pour la mise en oeuvre du procédé tel que présenté dans l'une quelconque des revendications 3 à 8, **caractérisé en ce qu'**il comprend des moyens de cassage et de séparation (8) des oeufs en fractions blancs (9), jaunes (10), entier (11), des moyens de filtration (15, 16, 17) de ces fractions (9, 10, 11), des moyens de refroidissement (18) des fractions (9, 10, 11) filtrées, des moyens de stockage froid, des moyens de débourbage ou d'homogénéisation, des moyens de réchauffement rapide (34), des moyens de stockage chaud, des moyens de refroidissement (43) après l'étape de maintien à la température de maintien, des moyens de concentration des fractions, des moyens de séchage des fractions concentrées et des moyens de conditionnement (47) séparé des fractions après l'étape de refroidissement.

11. Dispositif selon la revendication 9 ou 10, **caractérisé en ce que** les moyens de stockage froid, typiquement entre 0°C et 4°C, sont des cuves tampon (25, 26, 27).

12. Dispositif selon l'une quelconque des revendications 9 à 11, **caractérisé en ce que** les moyens de refroidissement (18) sont des échangeurs à plaques, des échangeurs tubulaires ou analogues, distincts des moyens de stockage (25, 26, 27).

13. Dispositif selon l'une quelconque des revendications 9 à 11, **caractérisé en ce que** les moyens de refroidissement (18) sont intégrés aux moyens de stockage qui sont des cuves tampon (25, 26, 27) à double enveloppe.

14. Dispositif selon l'une quelconque des revendications 9 à 13, **caractérisé en ce qu'**il comprend des moyens de pompage (32) des fractions réfrigérées par les moyens de refroidissement (18), jusque dans des moyens d'homogénéisation tels qu'une pompe à haute pression et/ou dans les moyens de débourbage (33), les moyens d'homogénéisation et les moyens de débourbage permettant l'éclatement des fractions avant le réchauffage jusqu'à la température de maintien.

15. Dispositif selon la revendication 14, **caractérisé en ce que** les moyens de réchauffement rapide (34) sont agencés pour réchauffer les fractions au-dessus de 40°C, jusqu'à une température proche de la température de maintien.

16. Dispositif selon la revendication 15, **caractérisé en ce que** les moyens de réchauffement (34) sont des échangeurs à plaques (35).

17. Dispositif selon la revendication 15 ou 16, **caractérisé en ce que** les moyens de stockage chaud sont des cuves process (36, 37, 38) à double enveloppe chaude, comprenant des moyens de contrôle et de commande de la température pour le maintien des fractions (9, 10, 11) à la température de maintien, et des moyens d'agitation lente pour faciliter le dégazage des fractions (9, 10, 11).

18. Dispositif selon la revendication 17, **caractérisé en ce que** les cuves process (36, 37, 38) et les cuves tampon (25, 26, 27) ont une capacité comprise entre 1000 et 20 000 litres, et de préférence entre 5000 et 10 000 litres.

## Patentansprüche

1. Verfahren zum Erhalt von haltbaren flüssigen Eierprodukten, umfassend eine thermische Behandlung nach dem Aufschlagen der frischen Eier und dem Trennen der Bestandteile bei einer zwischen 0 und 25°C inbegriffenen Temperatur, umfassend folgende Schritte:
- Auswahl mindestens eines der zu behandelnden, nach dem Aufschlagen der Eier erhaltenen flüssigen Anteile (9, 10, 11): Eiweiß (9), Eigelb (10), ganzes Ei (11); Ausspülen oder Homogenisierung zwecks Eliminieren der restlichen Unreinheiten und Aufspalten des oder der Anteile (9, 10, 11) in kleine Partikel, wobei die Temperatur unter 20°C liegt;
- schnelles Erhitzen des Anteils oder der Anteile (9, 10, 11) deutlich sofort oder in einigen Minuten bis zu einer deutlich zwischen 40 und 55°C inbegriffenen Aufbewahrungstemperatur beim Eiweißanteil (9) und bevorzugt 45°C, und zwischen 50 und 66°C beim Eigelbanteil (10) und bevorzugt 55°C, und zwischen 50 und 66°C beim ganzen Anteil (11), und bevorzugt 55°C;
- Aufrechterhaltung der Temperatur bei der Aufbewahrungstemperatur mit Gasabscheidung durch langsame Wirkung des Teils oder der Teile (9, 10, 11) über eine deutlich zwischen 30 Minuten und 4 Tagen inbegriffene Dauer;
- Abkühlen bis zu einer Haltbarkeitstemperatur unterhalb von 25°C, wobei die Haltbarkeitsdauer ohne Hinzufügen von Zusätzen wenigstens drei Monate beträgt.
wobei das genannte Verfahren **dadurch gekennzeichnet ist, dass** die Anteile nach dem Abkühlen in luftdichten Verpackungen verpackt werden.

2. Verfahren gemäß Anspruch 1, **dadurch gekennzeichnet, dass** es zwischen der Auswahlstufe wenigstens eines zu behandelnden flüssigen Anteils (9, 10, 11) und der Ausspüloder Homogenisierungsstufe während einer Dauer von unter drei Tagen, bevorzugt von einem Tag, eine Stufe zur kalten Lagerung bei einer Temperatur von unter 20°C, bevorzugt von 4°C, umfasst.

3. Verfahren gemäß Anspruch 2, **dadurch gekennzeichnet**, das der ausgewählte Teil oder die ausgewählten Teile (9, 10, 11) nach dem Aufschlagen der Eier und vor der kalten Lagerung gefiltert werden.

4. Verfahren gemäß Anspruch 1 bis 3, **dadurch gekennzeichnet, dass** das Abkühlen nach der Aufbewahrungsstufe bei einer Temperatur in geschlossenem Kreislauf derart erfolgt, dass das Zusetzen von Sauerstoff verhindert wird.

5. Verfahren gemäß Anspruch 2 bis 4, **dadurch gekennzeichnet, dass** die Anteile (9, 10, 11) bei der Stufe der kalten Lagerung und der Erhitzungsstufe bis zur Aufbewahrungstemperatur deutlich gleichzeitig behandelt werden.

6. Verfahren gemäß Anspruch 1 bis 5, **dadurch gekennzeichnet, dass** die ausgewählten Anteile (9, 10, 11) alternierend, in jeder Stufe des Verfahrens nacheinander behandelt werden.

7. Verfahren gemäß Anspruch 1 bis 6, **dadurch gekennzeichnet, dass** der Anteil oder die Anteile (9, 10, 11) zwischen der Erhitzungsstufe bis zur Aufenthaltstemperatur und der Stufe der Beibehaltung der Temperatur eine zusätzliche Konzentrationsstufe erfahren, zum Beispiel durch Ultrafiltration, derart, dass eine Erhöhung des Trockenauszugs in den Anteilen (9, 10, 11) erhalten wird.

8. Verfahren gemäß Anspruch 1 bis 7, **dadurch gekennzeichnet, dass** die Anteile bei einer Aufbewahrungstemperatur von 40 bis 55°C beim Eiweiß und von 50 bis 66°C beim gesamten Ei gehalten werden, dass ihnen vor der Abkühlstufe Zusätze wie Zucker oder Salz hinzugesetzt werden.

9. Vorrichtung für die Umsetzung des gemäß in Anspruch 3 bis 6 vorgestellten Verfahrens, **dadurch gekennzeichnet, dass** sie Mittel zum Aufschlagen und Trennen (8) der Eier in Eiweißanteile (9), Eigelbanteile (10), ganze Eier (11), Filtermittel (15, 16, 17) dieser Anteile (9, 10, 11), Abkühlmittel (18) der gefilterten Anteile (9, 10, 11), Mittel zum kühlen Lagern, Mittel zum Ausspülen oder Homogenisieren, Mittel zum raschen Erhitzen (34), Mittel zum warmen Lagern, Abkühlmittel (43) nach der Stufe der Aufrechterhaltung der Aufbewahrungstemperatur und Mittel zur getrennten Verpackung (47) der Anteile nach der Abkühlstufe umfasst.

10. Vorrichtung für die Umsetzung des gemäß in Anspruch 3 bis 8 vorgestellten Verfahrens, **dadurch gekennzeichnete, dass** es Mittel zum Aufschlagen und Trennen (8) der Eier in Eiweiß- (9), Eigelb- (10), ganze Ei-Anteile (11), Filtrationsmittel (15, 16, 17) dieser Anteile (9, 10, 11), Abkühlmittel (18) dieser gefilterten Anteile (9, 10, 11), Mittel zum kühlen Lagern, Mittel zum Ausspülen oder Homogenisieren, Mittel zum raschen Erhitzen (34), Mittel zum warmen Lagern, Abkühlmittel (43) nach der Stufe der Aufrechterhaltung der Aufbewahrungstemperatur, Konzentrationsmittel der Anteile, Trockenmittel der konzentrierten Anteile und Mittel zur getrennten Verpackung (47) der Anteile nach der Abkühlstufe umfasst.

11. Vorrichtung gemäß Anspruch 9 oder 10, **dadurch gekennzeichnet, dass** die Mittel zum kühlen Lagern, typischerweise zwischen 0°C und 4°C, Pufferküvetten (25, 26, 27) sind.

12. Vorrichtung gemäß Anspruch 9 bis 11, **dadurch gekennzeichnet, dass** die Abkühlmittel (18) von den Lagermitteln (25, 26, 27) unterschiedliche Austauscher mit Platten, röhrenförmige Austauscher oder dergleichen sind.

13. Vorrichtung gemäß Anspruch 9 bis 11, **dadurch gekennzeichnet, dass** die Abkühlmittel (18) in die Lagermittel integriert sind, die Pufferküvetten (25, 26, 27) mit doppelter Ummantelung sind.

14. Vorrichtung gemäß Anspruch 9 bis 13, **dadurch gekennzeichnet, dass** sie Pumpmittel (32) der von den Abkühlmitteln (18) abgekühlten Anteilen bis in die Mittel zur Homogenisierung, wie zum Beispiele eine Hochdruckpumpe und / oder in den Ausspülmitteln (33) umfasst, wobei die Mittel zum Homogenisieren und Ausspülen das Aufspalten der Anteile vor dem Erhitzen bis zur Aufbewahrungstemperatur erlauben.

15. Vorrichtung gemäß Anspruch 14, **dadurch gekennzeichnet, dass** die Mittel zum raschen Erhitzen (34) zum Erhitzen der Anteile auf über 40°C bis auf eine sich der Aufbewahrungstemperatur annähernde Temperatur angeordnet sind.

16. Vorrichtung gemäß Anspruch 15, **dadurch gekennzeichnet, dass** die Erhitzungsmittel (34) Austauscher mit Platten (35) sind.

17. Vorrichtung gemäß Anspruch 15 oder 16, **dadurch gekennzeichnet, dass** die Mittel zur warmen Lagerung Prozessküvetten (36, 37, 38) mit doppelter warmer Ummantelung mit Kontrollmitteln und Steuermitteln der Temperatur zwecks Aufrechterhaltung der Anteile (9, 10, 11) bei der Aufbewahrungstemperatur und Mittel zum langsamen Schütteln zwecks Erleichterung der Gasabscheidung der Anteile (9, 10, 11) sind.

18. Vorrichtung gemäß Anspruch 17, **dadurch gekennzeichnet, dass** die Prozessküvetten (36, 37, 38) und die Pufferküvetten (25, 26, 27) eine zwischen 1 000 und 20 000 Litern inbegriffene und bevorzugt zwischen 5 000 und 10 000 inbegriffene Kapazität haben.

## Claims

1. A method for obtaining long-keeping liquid egg products, comprising heat treatment after breaking of the fresh eggs and separation of the components at a temperature between 0°C and 25°C and comprising the steps of:
- selecting at least one of the liquid fractions (9, 10, 11) to be treated obtained after breaking of the eggs: egg whites (9), egg yolks (10), whole (11);
- cleaning or homogenising in order to eliminate the residual impurities and break up the fraction or fractions (9, 10, 11) into small particles, the temperature being below 20°C;
- rapid heating of the fraction or fractions (9, 10, 11), substantially immediately or in a few minutes, up to a holding temperature between substantially 40°C and 55°C for the white fraction (9), and preferably 45°C, between 50°C and 66°C for the yolk fraction (10), and preferably 55°C, and between 50°C and 66°C for the whole fraction (11), and preferably 55°C;
- holding the temperature at the holding temperature, with degassing by slow agitation, of the fraction or fractions (9, 10, 11) for a period between substantially 30 minutes and 4 days;
- cooling to the keeping temperature, below 25°C, the keeping period being at least three months without incorporation of additives,
said method being **characterised in that** the fractions are packed in airtight packages after cooling.

2. A method according to Claim 1, **characterised in that** it comprises, between the step of selecting at least one of the liquid fractions (9, 10, 11) to be treated and the cleaning or homogenising step, a step of cold storing at a temperature below 20°C, preferably of 4°C, for a period less than three days, and preferably of one day.

3. A method according to Claim 2, **characterised in that** the selected fraction or fractions (9, 10, 11) are filtered after breaking of the eggs and before the cold storing.

4. A method according to any one of Claims 1 to 3, **characterised in that** the cooling after the temperature holding step is carried out in closed loop so as to avoid the incorporation of oxygen.

5. A method according to any one of Claims 2 to 4, **characterised in that** the fractions (9, 10, 11) are treated substantially simultaneously during the refrigeration storage step and the step of heating up to the holding temperature.

6. A method according to any one of Claims 1 to 5, **characterised in that** the selected fractions (9, 10, 11) are treated in turn, successively for each step of the method.

7. A method according to any one of Claims 1 to 6, **characterised in that**, between the step of heating up to the holding temperature and the temperature holding step, the fraction or fractions (9, 10, 11) undergo an additional step of concentration for example by ultrafiltration so as to obtain an increase of dry extract in the fractions (9, 10, 11).

8. A method according to any one of Claims 1 to 7, **characterised in that** the fractions are held at a holding temperature, of 40°C to 55°C for the whites, and 50°C to 66°C for the whole, with additives such as sugar or salt added, before being cooled during the cooling step.

9. A device for implementing the method as presented in any one of Claims 3 to 6, **characterised in that** it comprises means (8) of breaking and separating the eggs into white fractions (9), yolk fractions (10) and whole fractions (11), means of filtering (15, 16, 17) these fractions (9, 10, 11), means (18) of cooling the filtered fractions (9, 10, 11), cold storage means, cleaning or homogenisation means, rapid heating means (34), hot storage means, means (43) of cooling after the step of holding at the holding temperature and means (47) of separate packing of the fractions after the cooling step.

10. A device for implementing the method as presented in any one of Claims 3 to 8, **characterised in that** it comprises means (8) of breaking and separating the eggs into white fractions (9), yolk fractions (10) and whole fractions (11), means (15, 16, 17) of filtering these fractions (9, 10, 11), means (18) of cooling the filtered fractions (9, 10, 11), cold storage means, cleaning or homogenisation means, rapid heating means (34), hot storage means, means (43) of cooling after the step of holding at the holding temperature, means of concentrating the fractions, means of drying the concentrated fractions and means (47) of separate packing of the fractions after the cooling step.

11. A device according to Claim 9 or 10, **characterised in that** the means of cold storing, typically between 0°C and 4°C, are buffer tanks (25, 26, 27).

12. A device according to any one of Claims 9 to 11, **characterised in that** the cooling means (18) are plate exchangers, tubular exchangers or similar, distinct from the storage means (25, 26, 27).

13. A device according to any one of Claims 9 to 11, **characterised in that** the cooling means (18) are integrated with the storage means which are double-walled buffer tanks (25, 26, 27).

14. A device according to any one of Claims 9 to 13, **characterised in that** it comprises means (32) of pumping the fractions refrigerated by the cooling means (18), as far as into homogenisation means such as a high-pressure pump and/or into the cleaning means (33), the homogenisation means and the cleaning means enabling the fractions to be broken up before heating to the holding temperature.

15. A device according to Claim 14, **characterised in that** the rapid heating means (34) are organised to heat the fractions above 40°C, up to a temperature close to the holding temperature.

16. A device according to Claim 15, **characterised in that** the heating means (34) are plate exchangers (35).

17. A device according to Claim 15 or 16, **characterised in that** the hot storage means are process tanks (36, 37, 38) with a double hot wall, comprising means of monitoring and controlling the temperature for holding the fractions (9, 10, 11) at the holding temperature, and slow agitation means for facilitating the degassing of the fractions (9, 10, 11).

18. A device according to Claim 17, **characterised in that** the process tanks (36, 37, 38) and the buffer tanks (25, 26, 27) have a capacity between 1,000 and 20,000 litres, and preferably between 5,000 and 10,000 litres.
